# EUROPEAN PATENT APPLICATION

(11) **EP 4 604 563 A1**
(43) Date of publication of application: **20.08.2025**
(21) Application number: 24158359.0
(22) Date of filing: 19.02.2024
(51) Int. Cl.: H04N 23/61, H04N 23/70, H04N 23/71, H04N 23/72, H04N 23/73, H04N 23/741, H04N 23/76, H04N 25/533, H04N 25/583

(54) **METHOD FOR EXPOSURE CONTROL**

(71) Applicant: Beijing Xiaomi Mobile Software Co., Ltd., Beijing 100085 (CN)
(72) Inventor: Nikkanen, Jarno, Beijing, 100085 (CN); BAN, Hao, Beijing, 100085 (CN); Tuppurainen, Miikka, Beijing, 100085 (CN)
(74) Representative: dompatent von Kreisler Selting Werner - Partnerschaft von Patent- und Rechtsanwälten mbB

(57) **Abstract**

Method for exposure control including acquiring at least one first frame by a first image sensor; determine a region of interest, ROI, in the first frame; if no ROI in the first frame can be determined, determine auxiliary exposure correction information from the first frame and acquire an auxiliary frame on the basis of the auxiliary exposure correction information; and determine exposure parameters from the auxiliary frame and applying the exposure parameters to a subsequent frame for exposure correction of the subsequent frame.

## Description

The invention is related to Automatic Exposure Control (AEC) algorithms of digital cameras. Especially, it is related to Always-On (AON) digital cameras, in which the camera is continuously powered on and is used to provide input data for different computer vision (CV) purposes such as face detection and tracking, gaze detection and tracking, and so on.

The purpose of AEC is to control the exposure parameters of a digital camera, so that the raw image data is not too dark or too bright, but instead the dynamic range of the camera sensor is utilized well. The information content of the raw image is maximized by setting the exposure parameters in such a way that loss of information due to noise or quantization to zero is avoided (underexposure), loss of data due to pixel saturation is avoided (overexposure), and loss of data due to motion blur is avoided (too long exposure time given the scene and/or camera motion). In low illumination conditions and/or in high dynamic range scenes, a trade-off between the different causes of information loss is needed, because the dynamic range, the sensitivity, and noise properties of the camera sensor are non-ideal in practical real-life cameras.

Exposure parameters in a typical mobile camera sensor include at least exposure time (ET), analog gain (AG), and digital gain (DG). Additional exposure parameters could include modifiable camera aperture (f/#), neutral density (ND) filter(s), and flash units for providing additional illumination.

The purpose of AON is to do continuous analysis of the scene contents, and to do it without consuming a lot of power that would shorten battery life too much. AON scene analysis could be used to control other peripherals such as displays, acceleration of the cold start of regular cameras, etc.

There are no particularly designed AEC algorithms for AON use cases. Before deep learning (DL) based methods were widely utilized, the conventional non-DL approaches often use heuristic approaches to make predictions. Some of the work use a fixed target convergence level and mainly focus on how the different image areas are weighted when calculating the histogram of statistics. For example, a look-up-table based implementation in which the signal average is calculated only from the center area of the image is described in T. Kuno, H. Sugiura and N. Matoba, "A new automatic exposure system for digital still cameras," IEEE Transactions on Consumer Electronics, vol. 44, no. 1, pp. 192-199, 1998. More complicated shape of the assumed main object area is used in J.-S. Lee, Y.-Y. Jung, B.-S. Kim and S.-J. Ko, "An Advanced Video Camera System with Robust AF, AE, and AWB Control," IEEE Transactions on Consumer Electronics, vol. 47, no. 3, pp. 694-699, 2001.

When human faces or other objects of interest are in peripheral regions of the image and/or in high contrast conditions (e.g. backlit situation), regular AEC algorithms might fail to optimize the exposure of those objects of interest.

It is an object of the present invention to provide a more accurate AEC in particular for AON cameras. In addition, it is an object of the present invention to provide an AEC of an AON camera which requires lower power consumption compared with regular cameras.

The problem is solved by a method according to claim 1, a device according to claim 11 and a software product according to claim 14.

The method for exposure control according to the present invention may be included in a digital camera, a smartphone, a terminal or any other kind of user equipment. Therein, the implementing device may at least comprise a first image sensor. The method according to the present invention includes the steps:
acquiring at least one first frame by a first image sensor;
determine a region of interest, ROI, in the first frame;
if no ROI in the first frame can be determined, determine an auxiliary exposure correction information from the first frame and acquire an auxiliary frame on the basis of the auxiliary exposure correction information; and
determine exposure parameters from the auxiliary frame and applying the exposure parameters to a subsequent frame for exposure correction of the subsequent frame.

Therein, the ROI may be any object of interest usually in the foreground of the first frame, such as a face of person or the like. Therein, it is of interest for the user or any CV algorithms that the ROI and in particular the object in the ROI is clearly visible/recognizable.

Therein, the at least one first frame may be a frame of a stream of frames continuously acquired by the first image sensor. In particular, if the first image sensor is an always on (AON) image sensor, a continuous stream of frames is acquired by the first image sensor. Further, the subsequent frame refers to any frame acquired after the first frame and in particular after the auxiliary frame. Therein, the subsequent frame can refer to the immediately following frame of the auxiliary frame or can be any frame after the first frame and the auxiliary frame. Therein, the first frame, the auxiliary frame and the subsequent frame can be part of the same stream of frames acquired by the same first image sensor. Alternatively, the auxiliary frame and/or the subsequent frame can be a frame of a different stream of frames generates by a second image sensor, different from the first image sensor. Alternatively, the first frame, the auxiliary frame and the subsequent frame can be acquired by different image sensors. Therein, in particular, the first image sensor and the second image sensor may be part of the same implementing device. In other words, the implementing device may have more than one camera module, each comprising a respective image sensor, wherein by a first camera module the first image sensor is implemented, wherein by a second camera module, the second image sensor is implemented.

According to the present invention, if no ROI in the first frame can be determined, auxiliary exposure correction information on the basis of the first frame is determined and an auxiliary frame is acquired on the basis of the auxiliary exposure correction information. The auxiliary exposure correction information is used to determine exposure parameters used to acquire the auxiliary frame. Hence, the present invention copes with the problem that in the first frame the ROI cannot be detected due to over exposure or under exposure, although the first frame may contain such an ROI. Commonly known AEC algorithm in the prior art needs to take care of all information in the scene to avoid losing valid information. However, when the dynamic range in the scene exceeds the camera's capability, the high luminance area or low luminance area might need to be compromised in the final AEC decision. For Instance, the backlit scene with a dark foreground object of interest is one common scenario that causes the important information to be lost in the foreground. Therefore, for this kind of problem, it is very important to know where the ROI is for exposure. Thus, in the auxiliary frame the foreground or the background is made visible and detectable such that the exposure parameters for the ROI can be determined for a subsequent frame via the determined auxiliary exposure correction information. In high contrast scene where the object is not dominant, it is fairly common that the global exposure level already converged but the object cannot be detected because of over exposure or under exposure. By the present invention a multi-exposure auxiliary AEC scheme is proposed for solving the high contrast scene without a dominant object detected.

Preferably, the auxiliary exposure correction information is determined on the basis of the foreground or the background of the first frame. Thus, according to the present invention, the first frame is separated into foreground and background. Common techniques exist for this task. Therein, objects of interest in an image are usually in the foreground. If the foreground is overexposed or underexposed, respective exposure correction can be determined to make the ROI detectable in the auxiliary frame. However, the present invention also works with the object of interest in the image being in the background.

Preferably, the exposure parameters to be applied to the subsequent frame are determined in addition on the basis of the auxiliary exposure correction information. Therein, knowledge about a potential ROI in the subsequent frame can be used when determining an ROI in the subsequent frame.

Preferably, exposure parameters of the subsequent frame are determined in an ROI of the auxiliary frame. Thus, an ROI may be detected in the auxiliary frame, wherein the exposure parameters are determined for the ROI and applied to the subsequent frame.

Preferably, the auxiliary exposure correction information includes a potential ROI, i. e. an ROI in the auxiliary frame might be a potential ROI of the subsequent frame. Thus, auxiliary exposure correction information may include information regarding position of the ROI of the subsequent frame. Additionally or alternatively the auxiliary exposure correction information includes exposure parameters of the auxiliary frame. These exposure parameters may be used for exposure correction of the subsequent frames as well.

Preferably, the exposure parameter includes one or more of the exposure time (ET), analog gain (AG) and a digital gain (DG). As recited before, additional exposure parameters could include a modifiable camera aperture (f/#), a neutral density (ND) filter, flash units for providing illumination or the like. The present invention is not specifically limited to either control of a specific exposure parameter or the distribution between the possible exposure corrections. The presented invention concentrates on the way to calculate the total exposure Et_{TOT} which may be provided by Et_{TOT} =ET*AG*DG, and not in the way how this total exposure is divided between the different exposure parameters/contributions (e.g. the trade-off between noise and risk of motion blur, via different proportions of exposure time and the gains).

Preferably, the subsequent frame is acquired by the first image sensor which also acquires the first frame, which may in particular operated in different modes such as AON mode for acquiring the first frame and conventional mode, i.e. single image mode, for the subsequent frame. Alternatively the subsequent frame is acquired by a second image sensor different from the image sensor. Therein, the first image sensor may be implemented in an AON camera module. Alternatively or additionally, the second image sensor may be implemented in a conventional/regular camera module. Since the AON camera module is always running in the background, the AEC result of the AON camera module can also be utilized to assist AEC of the regular camera module, such as accelerating the convergence of exposure when turning on the regular camera module. For example, the converged AON AEC total exposure determined from the auxiliary frame, together for example with the AON camera module sensor sensitivity information, can be used to make an estimate of the scene brightness (=lux level estimate), which in turn can be used to select more optimal cold start values for the regular camera module exposure parameters of the subsequent frame. That is, more optimal compared with just one default settings for all conditions, which would need to be used if there was no information about scene brightness.

Preferably, an initial exposure correction is applied to the first frame prior to determining the ROI in the first frame. Therein, the initial exposure correction can be determined by a common AEC in order to be applied to the raw data of the first frame. Alternatively, in an iterative process, the exposure correction applied to the first frame may be the exposure correction of a subsequent frame of a previous iteration. Thus, the starting point for the method according to the present invention may be a conventionally calculated AEC or may be the exposure parameters of a previous iteration according to the steps of the method described before.

Preferably, an initial exposure correction of the subsequent frame is applied prior to determining the ROI of the subsequent frame. Hence, the subsequent frame is corrected in order to be able to correctly determine the ROI.

Preferably, if no ROI can be detected in the first frame, contrast information of the first frame is determined indicating the dynamic range of the first frame, indicative of over exposure or under exposure of the first frame. Thus, if no ROI can be detected in the first frame, it need to be decided whether this is because no ROI is present at all in the first frame or because the ROI detection fails due to information loss caused by over exposure or under exposure of the first frame. Hence, by the contrast information it can be decided, whether in the first frame information is lost due to over exposure or under exposure.

Preferably, if no ROI can be detected in the first frame and the contrast information of the first frame neither indicates over exposure nor under exposure, it is determined that the first frame does not contain any ROI and no auxiliary frame and/or auxiliary exposure correction information is obtained. In the case that no ROI can be detected while neither an over exposure nor an under exposure is detected for the first frame, it means that simply no ROI is in the first frame and conventional exposure correction, in particular by a globally AEC, can be applied.

Preferably, if an ROI is detected in the first frame, the exposure information is determined for the ROI and the subsequent frame is corrected on the basis of the exposure information determined for the ROI in the first frame. Thus, without obtaining an auxiliary frame, if in the first frame already an ROI can be detected, sufficient information is available in order to determine the exposure parameters from the first frame to be applied to the subsequent frame which can be used for exposure correction of the subsequent frame.

Preferably, the exposure corrected subsequent frame is displayed and/or stored and/or transmitted to another device. Of course additional steps can be performed prior to display. Hence, the exposure corrected subsequent frame is the frame used by the user or the implementing device for the respective purposes, i.e. CV applications/algorithms. Contrary, the auxiliary frame is not displayed, stored or transmitted. Hence, the auxiliary frame only serves the purpose of identifying the ROI and the exposure parameters.

Preferably, the steps of the method are implemented in an iterative of repetitive loop. Thus, in particular, the steps of the method are repeated for each frame of a stream of frames or a subset of frames of the stream of frames. Therein, the subset of frames may correspond to frames in a fixed interval, i.e. every second frame or the like, or may be initiated on demand respectively without regular and fixed intervals or changing intervals. Therein, the subsequent frame may become the first frame of a subsequent iteration/repetition.

Another aspect of the present invention relates to a device comprising at least one image sensor to acquire at least one first frame, a data storage device and a processor, wherein in the data storage device instructions are stored which, when executed by the processor, performing the steps of the method as described before. In particular, the device is further built along the features described in connection with the method before.

Preferably, the device further comprises an image signal processor (ISP) for exposure correction of the first frame and/or the subsequent frame. In addition, the ISP may also be implemented to obtain the auxiliary frame. Alternatively the device comprising an ISP to determine auxiliary exposure correction information from the first frame and controlling one of the at least one image sensors to acquire the auxiliary frame. In particular, the ISP may be built as AON ISP. Hence, in order to determine the auxiliary exposure correction information and acquire the auxiliary frame, a dedicated (AON) ISP can be implemented. This (AON) ISP can be implemented in addition to an ISP implemented for exposure correction of the subsequent frame. In AON mode parts of the imaging system are switched to inactive state in order to reduce power consumption and only the low power AON ISP and control processor are processing the camera data. The camera module could be different than the ones that are used in the actual photography or videography use cases, or the camera module could be switched to low power mode that has e.g. lower frame rate and smaller readout resolution. The AON control processor(s) can run e.g. AEC to control the AON camera sensor exposure parameters, control algorithms for the AON ISP, and different CV algorithms. For example, the AON face detection and gaze detection CV algorithms could be used to control the display of the device (turning display off when user is not looking at it).

In another aspect, a computer-readable storage medium is provided storing instructions which, when executed by a processor, cause the processor to carry out the steps of the method as described before. In particular, the processor may be part of the device as described before.

In the following, the present invention is described in more detail with reference to the accompanying figure.

The figures show:
- Figure 1: a flow diagram of the method according to the present invention,
- Figure 2: a schematic representation of the algorithm according to the present invention,
- Figure 3: a schematic representation of a stream of frames,
- Figure 4: an example for a globally corrected exposure of an image,
- Figure 5: an example result of the algorithm according to the present invention,
- Figure 6: a hardware implementation of the present invention,
- Figure 7: a hardware implementation of the present invention,
- Figure 8: a first embodiment of a device according to the present invention and

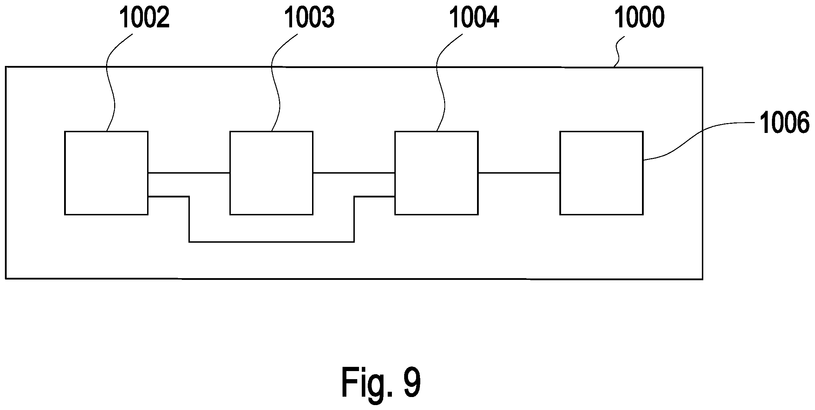

- Figure 9: a further embodiment of a device according to the present invention.

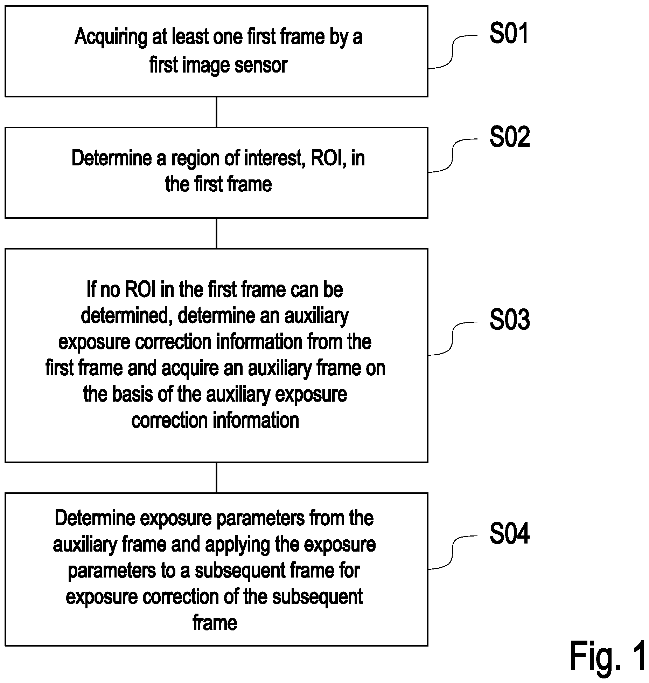

Referring to Figure 1 showing a schematic flow diagram of the method according to the present invention. The method includes:

In step S01, at least one first frame is acquired by a first image sensor.

In step S02, a region of interest, ROI, is determined in the first frame.

In step S03, if no ROI in the first frame can be determined, determine auxiliary exposure correction information from the first frame and acquire an auxiliary frame on the basis of the auxiliary exposure correction information.

In step S04, exposure parameters are determined from the auxiliary frame and applying the exposure parameters to a subsequent frame for exposure correction of the subsequent frame.

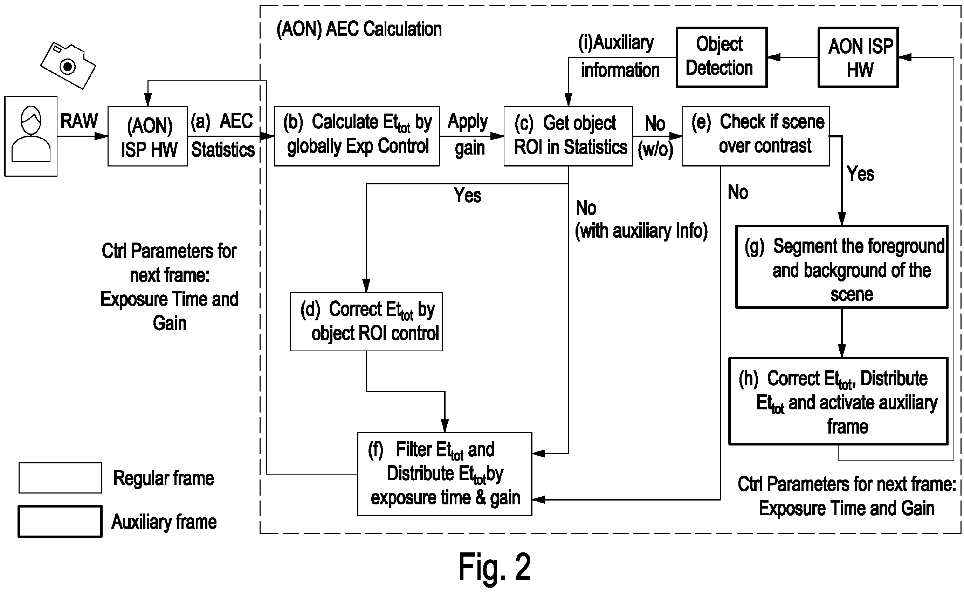

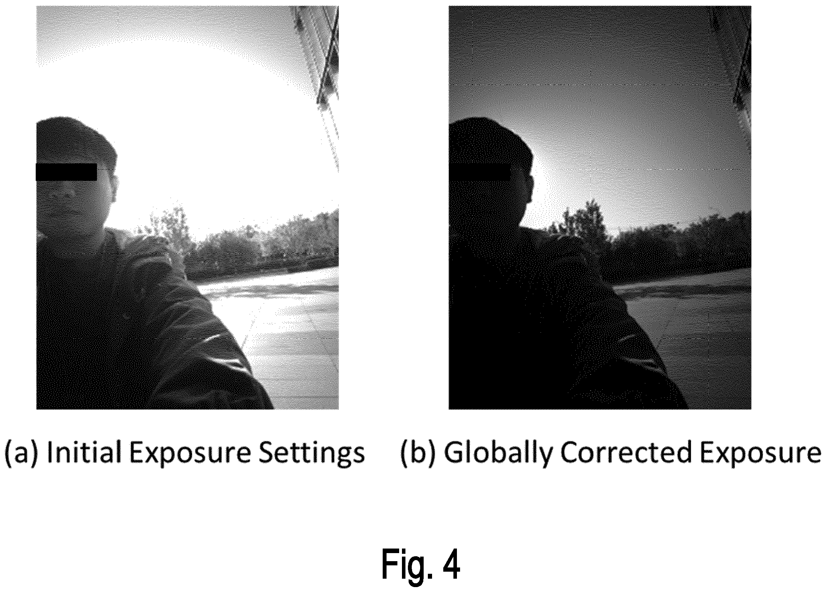

Figure 2 showing a schematic representation of the method according to the present invention. According to step S01, a first frame is acquired by a first image sensor. The raw data of the first frame is provided to an (AON) ISP which is in the example of Figure 2 implemented as a dedicated hardware (HW) in order to determine, according to item (a), the AEC statistics. With this AEC statistic according to item (b) a global exposure control Etₜₒₜ is determined in order to apply a global exposure correction to the first frame. This step is in particular exemplified in Figure 4, wherein Figure 4(a) shows the uncorrected image of the first frame. After applying the global exposure correction according to Figure 4(b), the over exposure of the background is reduced. However, due to the exposure correction, the face in the foreground is not visible anymore. Any CV application/algorithm may not be able anymore to detect the face in the globally corrected exposure corrected frame of Figure 4(b). However, the globally corrected image of Figure 4(b) is then, according to item (c) of Figure 2, used for ROI detection. If an ROI can be successfully detected from the first frame, then according to item (d), a corrected Etₜₒₜ is determined for the ROI. The corrected Etₜₒₜ, according to item (f) is filtered in order to ensure convergence of the exposure correction, and distributed among the different exposure parameters/contributions, i. e. exposure time, analog gain and digital gain and so on. The filtered and disturbed Etₜₒₜ is then provided to the (AON) ISP HW for exposure correction of any subsequent frame.

If no ROI can be detected in the first frame and no auxiliary frame is available, according to item (e), the scene is checked for over contrast, i. e. over exposure, or under exposure. If no over exposure or under exposure can be detected, the global exposure correction Etₜₒₜ calculated according to item (b) is then filtered and distributed according to item (f) and subsequently used in order to exposure correct any subsequent frame by the (AON) ISP HW. If, according to item (e) over exposure or under exposure of the first frame is detected, in item (g) the first frame is segmented into foreground and background of the displayed scene. Subsequently, according to item (h), auxiliary exposure correction information is determined. Since usually the ROI is in foreground of a scene, the auxiliary exposure correction information is determined according to the foreground of the first frame. On the basis of the determined auxiliary exposure correction information, i. e. the corrected Etₜₒₜ, by an (AON) ISP HW (which might be same (AON) ISP HW exposure correcting the initial raw image or a separate (AON) ISP HW), an auxiliary frame is generated which is then provided to an object detection in order to detect an ROI. The auxiliary frame is provided to item (c) to determine exposure statistics of the ROI determined in the auxiliary frame. In addition, as Auxiliary Information according to item (i), auxiliary exposure correction information, such as position of a potential ROI, might be provided to the (AON) ISP HW for exposure correction of the subsequent frame. From there, with the auxiliary exposure correction information, the steps are the same as described before depending on whether an ROI is detected in the exposure correction auxiliary frame of not.

In the following, a detailed example of the method is provided, wherein the main steps are corresponding to the indications of Fig. 2:
The present invention provides a solid solution for solving the auto exposure control for always-on camera. It uses prior knowledge for ROI of object detection, and gets AEC statistics from ISP HW block.
The main steps of the technique are as follows:
   For regular frame
      a) Use AEC statistics as the input, which is computed from ISP HW block;
      b) Calculate total exposure time from global exposure control level;
         1. Compute a histogram based on AEC statistics by applying a spatially weight map. Then calculate current mean value and current brightest value.
         2. Map the current brightest value to predefined target brightest value and apply a corresponding multiplier on the mean value, which produces a new target mean value.
         3. Check if the resulting target mean value is within the range of predefined minimum mean value and maximum mean value. If not, apply additional multiplier to make the target mean value meet the closest range border.
         4. Recalculate the multiplier for total exposure change based on target mean value and current mean value. Then apply the current multiplier on AEC statistics values for later steps.
      c) Acquire the object detection ROI(s), and select the largest ROI or the most dominant object in the scene;
         1. If the object has been detected or the size of ROI is not zero, go to d) step. If not, go to e) step when there is no auxiliary information provided to activate auxiliary frame. Otherwise it directly goes to f) step for regular frame mode.
      d) Correct total exposure time from object ROI exposure control level;
         1. Get the histogram for the statistics value only in the object detection ROI. Then calculate current object mean value by the predefined tunable mean value index.
         2. Check if the current object mean value is within the range of predefined minimum object mean value and maximum object mean value. If not, make the target object mean value meet the closest range border.
         3. Recalculate the multiplier for total exposure change based on target object mean value and current object mean value.
      e) Divide the whole statistics into low luminance area and high luminance area, and calculate the contrast within the scene;
         1. Calculate threshold of the scene which can divide the whole statistics into two categories by maximizing intra-class intensity variance.
         2. Calculate the mean value of both low luminance area and high luminance area.
         3. Compare the predefined over contrast threshold and the contrast level in the scene, which is the difference of low luminance area mean value and high luminance area mean value.
         4. If the scene is perceived over contrast, go to g) step and use auxiliary frame information. If not, go to f) step.
      f) Finally, the target total exposure time has been corrected through the above steps. After filtering, it can output control parameters for next frame to controller.
         1. Filter the total exposure value to achieve a smooth convergence.
         2. Distribute the total exposure time into gains and exposure time which depends on the local motion and luminance.
         3. Filter the exposure time to avoid stripe artifacts which is introduced by the frequency of alternating current.
   For the auxiliary frame
      g) Segment the foreground and background of the scene by the luminance threshold;
         1. Calculate both vertical and horizontal direction one-dimension histogram for AEC statistics, which is the number of pixels under luminance threshold.
         2. Get the orientation information of device, if the photo is captured as landscape (portrait) orientation, then check the column-wise (row-wise) histogram border values is smaller than the center value. If yes, the foreground is darker where the exposure level needs to be boosted. If not, the foreground is brighter and the exposure level needs to be suppressed.
      h) Correct the total exposure depends on the foreground is darker area or brighter area, and calculate exposure time and gain for the auxiliary frame;
         1. Calculate the new ET_{TOT} based on the mean value of foreground and target mean value.
         2. Filter the total exposure value to achieve a smooth convergence.
         3. Distribute the total exposure time into gains and exposure time which depends on the local motion and luminance.
         4. Filter the exposure time to avoid stripe artifacts which is introduced by the frequency of alternating current.
      i) Recapture the data with recalculated exposure parameters and pass the auxiliary information to the next regular frame in step c)
         1. Recapture the raw data with the recalculated exposure parameters from last steps.
         2. Get the AEC statistics size and output image from AON ISP HW block.
         3. Send image into object detection block and calculate the object ROI refer to AEC statistics size.
         4. Give the auxiliary information (object ROI refer to AEC statistics size) to the next regular frame in step c).

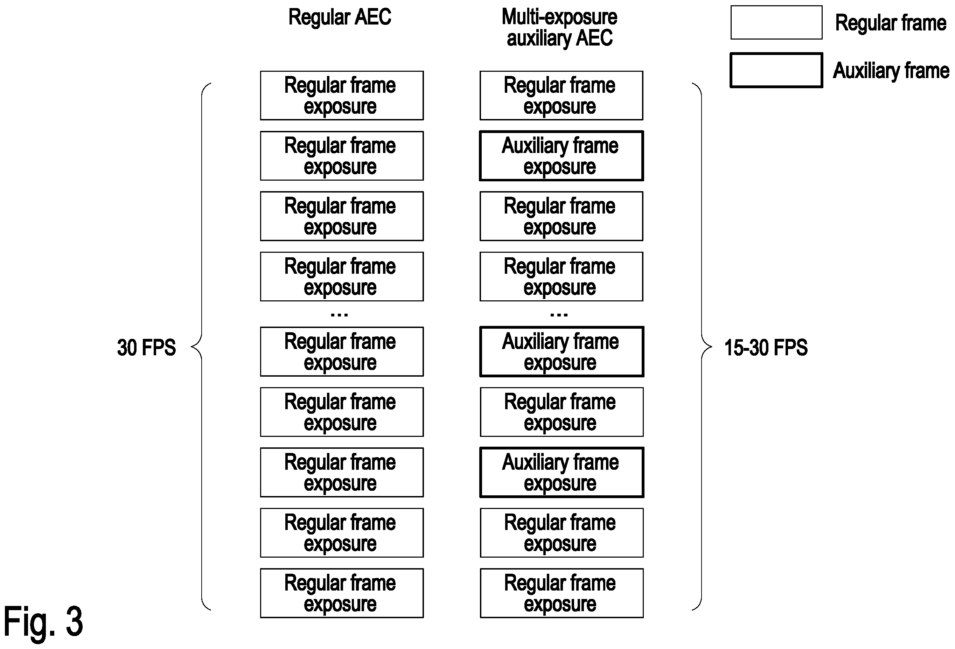

Referring to Figure 3, showing on its left side a regular frame stream comprising frames with 30 fps without any auxiliary frame. On the right side of Figure 3, a frame stream according to the present invention is exemplified, wherein individual frames are replaced by auxiliary frames. Therein, the auxiliary frames can be distributed evenly within the stream of frames, i. e. every second, forth frame and so on, or can be only included into the generated frame, when necessary, in order to determine the ROI.

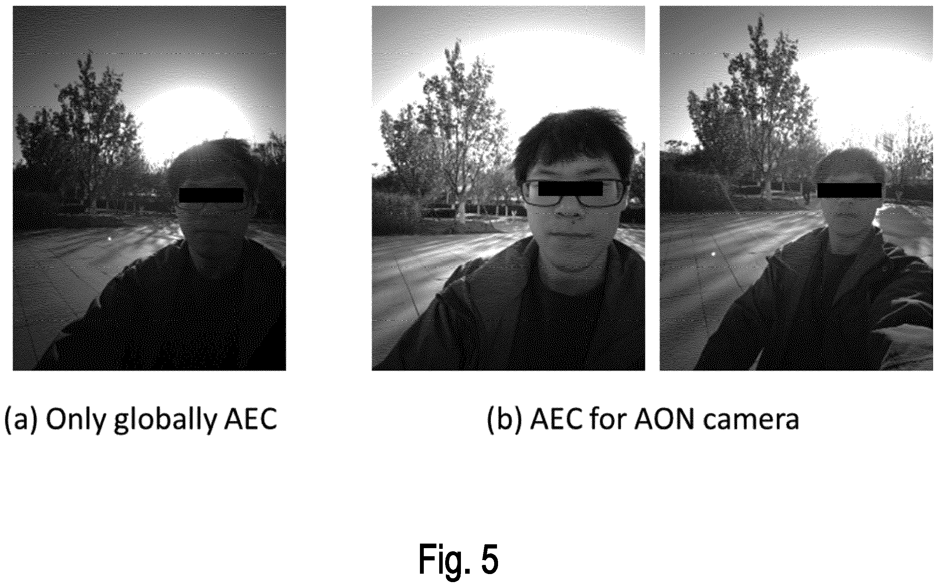

The result of the present invention is depicted in Figure 5. In Figure 5(a) the exposure corrected image according to the prior art is shown, wherein the ROI, i.e. the face of the person, is underexposed, while the over exposure of the sun in the background is tried to be minimized. Figure 5(b) shows the result of the present invention, wherein the ROI, the face of the person, is clearly visible and recognizable for any CV application/algorithms. Therein, the CV application/algorithms is relying on the face recognition instead of correct and pleasing control of the exposure of the background as for conventional pictures. (Please note that in Figures 4 and 5 identification of the pictured person is prevented by black bars which are neither part of the raw image nor part of the result of the exposure corrected images.)

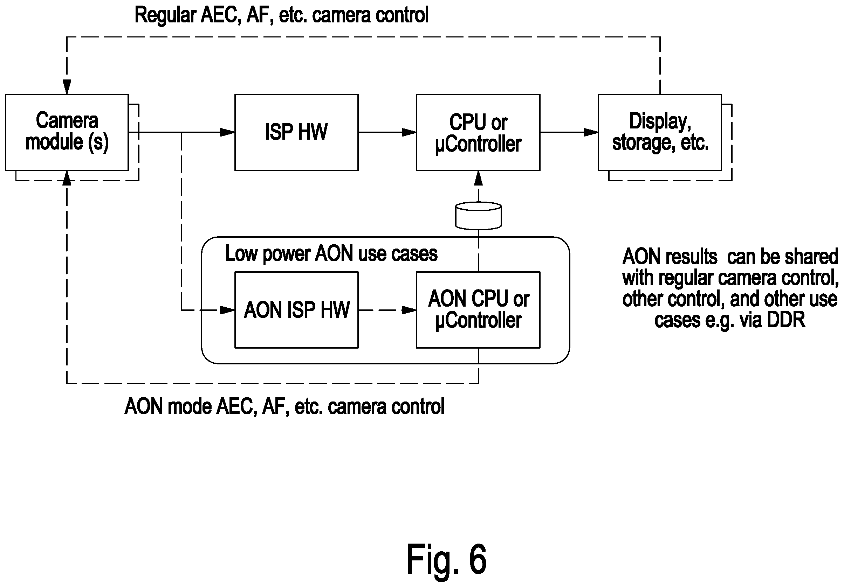

Referring to Figure 6, showing a hardware implementation of the device according to the present invention. First frame and subsequent frame are acquired by one or more camera modules, wherein the first frame is exposure corrected in an AON ISP HW and auxiliary exposure correction information are determined by an AON CPU or microcontroller and provided to a CPU or microcontroller feeding back exposure parameters to the ISP HW in order to correct exposure of the any subsequent frame. The subsequent frame may then be stored or displayed or used in any CV application.

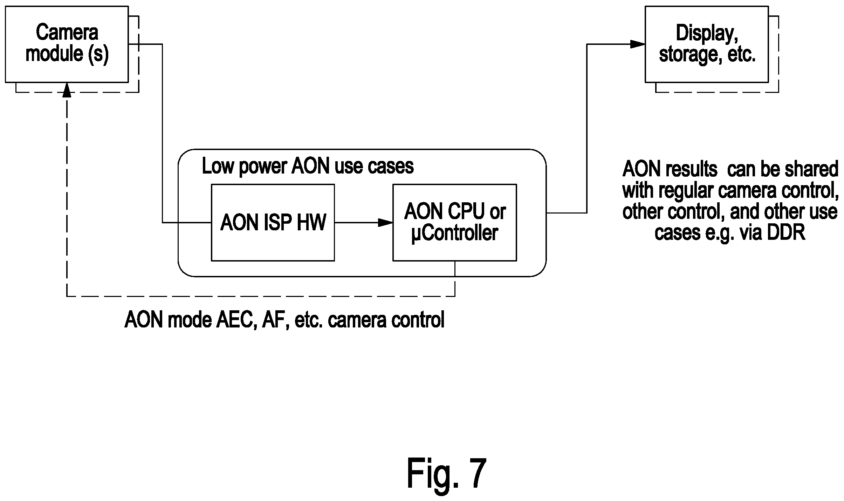

Referring to Figure 7, wherein the AON ISP HW and the AON CPU might determine the exposure correction of the first frame and also apply an exposure correction to the subsequent frame with no additional ISP HW necessary in order to exposure corrected any subsequent frame.

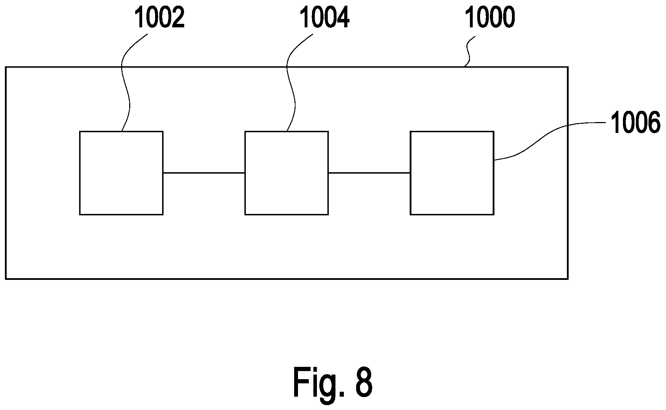

Referring to Figure 8 showing a device according to the present invention. The device 1000 comprises a processor 1004 which is connected to a first image sensor 1002 and a storage device 1006. Therein, in the storage device 1006 instructions are stored which will executed by the processor 1004 perform the steps of the method according to the present invention.

It is referred to Figure 8 showing a similar device 1000 wherein a second image sensor 1003 is connected to the processor 1004. Therein, by the first image sensor 1002 a first frame is acquired and by the second image sensor 1003 the subsequent frame is acquired. Therein, in particular the first image sensor 1002 may be implemented as AON image sensor.

## Claims

1. Method for exposure control including:
acquiring at least one first frame by a first image sensor;
determine a region of interest, ROI, in the first frame;
if no ROI in the first frame can be determined, determine auxiliary exposure correction information from the first frame and acquire an auxiliary frame on the basis of the auxiliary exposure correction information; and
determine exposure parameters from the auxiliary frame and applying the exposure parameters to a subsequent frame for exposure correction of the subsequent frame.

2. Method according to claim 1, wherein the auxiliary exposure correction information includes a potential ROI and/or exposure parameters of the foreground or background of the first frame.

3. Method according to claim 1 or 2, wherein the exposure parameters include one or more of an exposure time, an analog gain and a digital gain.

4. Method according to any of claims 1 to 3, wherein an initial exposure correction is applied to the first frame prior to determine the ROI of the first frame.

5. Method according to any of claims 1 to 4, wherein initial exposure correction of the subsequent frame is applied prior to determine the ROI of the subsequent frame.

6. Method according to any of claims 1 to 5, wherein if no ROI is detected in the first frame, contrast information of the first frame is determined indicating over exposure or under exposure of the first frame.

7. Method according to claim 6, wherein if the contrast information of the first frame neither indicates over exposure nor under exposure, determine that the first frame does not contain any ROI.

8. Method according to any of claims 1 to 7, wherein if a ROI is detected in the first frame, the exposure information is determined for the ROI.

9. Method according to any of claims 1 to 8, wherein the subsequent frame is acquired by the first image sensor or a second image sensor different from the first image sensor.

10. Method according to any of claims 1 to 9, wherein the first image sensor is an always on, AON, image sensor.

11. Device comprising at least one image sensor to acquire at least one first frame, a data storage device and a processor, wherein in the data storage device instructions are stored which, when executed by the processor, perform the steps of the method according to any of claims 1 to 10.

12. Device according to claim 11, further comprising an image signal processor, ISP, for exposure correction of the first frame and/or a subsequent frame, wherein in particular the ISP is built as always on, AON, ISP.

13. Device according to claims 11 or 12, further comprising an ISP in particular built as always on, AON, ISP, to determine auxiliary exposure correction information from the first frame and controlling one of the at least one image sensors to acquire the auxiliary frame.

14. Computer-readable storage medium storing instructions which, when executed by a processor, cause the processor to carry out the steps of the method according to any of claims 1 to 10.
